# FASCICULE DE BREVET EUROPEEN

(11) **EP 2 672 221 B1**
(45) Date de publication et mention de la délivrance du brevet: **02.08.2017**
(21) Numéro de dépôt: 13170707.7
(22) Date de dépôt: 05.06.2013
(51) Int. Cl.: G01C 19/66, H01S 3/036, H01S 3/038, H01S 3/083, H01S 3/03

(54) **Gyrolaser comprenant un dispositif de protection contre la corrosion**
Laserkreisel, der eine Schutzvorrichtung gegen Korrosion umfasst
Gyrolaser comprising a device protecting against corrosion

(30) Priorité: 08.06.2012 FR 1201650
(43) Date de publication de la demande: 11.12.2013
(73) Titulaire: Thales, 92400 Courbevoie (FR)
(72) Inventeur: Mary, Alexandre Charles Lucien, 86100 Chatellerault (FR)
(74) Mandataire: Brunelli, Gérald

(56) Documents cités:
- EP-A1- 0 323 358
- EP-A2- 0 213 489
- EP-A2- 0 905 480

## Description

L'invention concerne l'augmentation de la durée d'utilisation d'un gyrolaser, et plus particulièrement, l'amélioration de la résistance contre la corrosion d'un joint assurant l'herméticité d'une partie de la structure du gyrolaser.

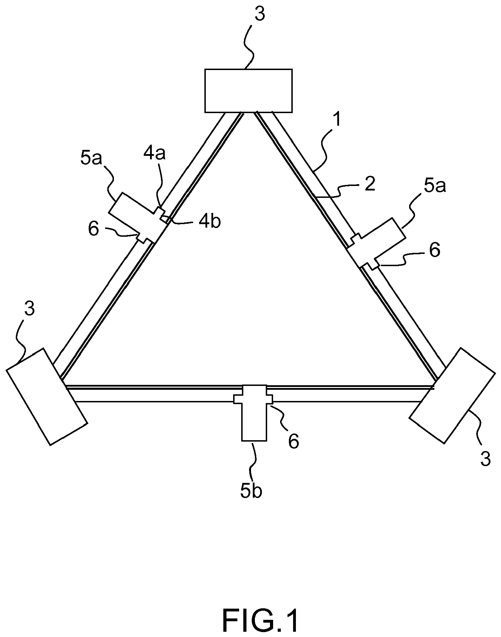

Un gyrolaser ou gyromètre permet de mesurer une vitesse angulaire. La figure 1 illustre une représentation schématique de la structure d'un gyrolaser.

Typiquement, un gyrolaser comprend une structure appelée bloc optique 1, rigide de forme polygonale, souvent de forme triangulaire ou carré. Le bloc optique 1 comprend un matériau vitrocéramique de coefficient de dilatation élastique proche de zéro. Autrement dit, sur la gamme de température d'utilisation du gyrolaser comprise entre -60°C à 100°C, le premier matériau vitrocéramique ne se dilate pas et ne se contracte pas. En effet, le premier matériau vitrocéramique comprend des premiers matériaux amorphes qui se dilatent, des deuxièmes matériaux cristallins qui se contractent et des ions circulant faisant la transition entre les premiers et deuxièmes matériaux. La dilatation des premiers matériaux compense le rétreint des deuxièmes matériaux du matériau vitrocéramique.

Le bloc optique 1 comprend un tube capillaire 2 dans lequel circule un rayonnement laser. Le tube capillaire 2 est maintenu sous une atmosphère comprenant des gaz tels que l'hélium ou le néon. Des miroirs 3 sont disposés à chaque coin du bloc optique 1 de manière à transmettre le rayonnement laser. Le tube capillaire 2 rempli d'un mélange de gaz et les miroirs constituent un milieu amplificateur du rayonnement laser.

Le bloc optique 1 présente des ouvertures 4a et le tube capillaire 2 présente des ouvertures 4b, les ouvertures 4a et les ouvertures 4b étant disposées en vis-à-vis l'une de l'autre de manière à laisser passer des électrodes 5a et 5b qui pénètrent à l'intérieur du tube capillaire 2 et qui génèrent des décharges plasma à l'intérieur du tube capillaire 2. L'anode 5a et la cathode 5b comprennent un matériau métallique comprenant généralement des matériaux tels que l'aluminium ou l'invar qui sont des matériaux dont le coefficient de dilatation élastique n'est pas négligeable.

L'herméticité du tube capillaire 2 est assurée par un joint 6 comprenant de l'indium. L'indium est connu pour ses bonnes propriétés de résistance contre la corrosion et ses propriétés mécaniques. En effet, ce matériau reste souple et malléable jusqu'à des températures cryogéniques, typiquement de l'ordre de -150°C. Le joint 6 est situé à l'intérieur des ouvertures 4a dans le bloc optique 1 ce qui permet d'éviter des fuites vers l'extérieur des gaz inertes qui endommageraient de manière irréversible le gyrolaser.

Un gyrolaser est un appareil de mesure angulaire généralement destiné à être embarqué à bord d'un aéronef ou d'un sous-marin, par exemple. Il peut donc être soumis à des environnements très corrosifs tels que le milieu marin ou à des variations importantes de température lors des décollages ou des atterrissages des aéronefs.

Lorsque le gyrolaser n'est pas en fonctionnement, l'indium présent en surface du joint et qui entre en contact avec l'oxygène de l'air ou de l'eau forme une couche de passivation comprenant de l'oxyde d'indium qui le rend insensible à la corrosion. Lorsque le gyrolaser est en fonctionnement, la différence de potentiel appliquée aux électrodes 5a et 5b inhibe la passivation de l'indium du joint 6 ce qui le rend sensible à la corrosion.

Par ailleurs, les variations de température subies par le gyrolaser engendrent une dilatation ou un rétreint des matériaux des électrodes 5a, 5b. Or la vitrocéramique constituant le bloc optique 1 a un coefficient de dilatation très faible ce qui engendre des différences de dilatation entre les matériaux d'électrodes 5a, 5b et le matériau vitrocéramique. Le joint 6 comprenant de l'indium compense les différences de dilatation entre les deux matériaux.

Au fur et à mesure de l'utilisation du gyrolaser, le joint 6 comprenant de l'indium accumule une fatigue mécanique ce qui engendre des microfissures dans lesquelles les molécules d'oxygène présentes dans l'air ou dans l'eau s'infiltrent. Une couche de passivation se forme à l'intérieur du joint 6 et crée des trous d'oxyde dans le volume du joint 6. L'ensemble des trous forment alors des macrofissures.

Pour limiter les risques de détérioration dus à la corrosion du joint 6 deux solutions sont proposées dans la littérature.

Une première solution est proposée dans la demande de brevet US 2004/00040941. Elle consiste à isoler hermétiquement l'ensemble du gyrolaser de l'environnement corrosif en le plaçant à l'intérieur d'une enceinte maintenue sous une atmosphère comprenant un gaz inerte.

La mise en oeuvre de cette solution reste encore très difficile et onéreuse, en effet, la réalisation d'une enceinte parfaitement hermétique à l'oxygène de l'air et de l'eau et permettant le passage de connectiques n'étant pas encore maîtrisée.

Une amélioration de cette solution consiste à ajouter des pièges à gaz. Les pièges à gaz sont des matériaux métalliques facilement oxydables. Au contact avec l'oxygène, ils s'oxydent préférentiellement pour former un dépôt blanc.

Une deuxième solution est proposée dans l'état de la technique. Elle consiste à protéger localement le joint 6 en disposant une barrière de protection 8 sur le joint 6. Cette barrière 8 peut être une colle, un vernis ou un mastic empêchant le passage de l'oxygène.

Cette solution présente deux inconvénients : d'une part, les matériaux utilisés se dégradent sous les effets, notamment, des variations thermiques ou du champ électrique appliqué aux électrodes 5a, 5b, d'autre part, les colles, vernis ou autres matériaux que l'on peut disposer à la surface du joint pour le protéger contre la corrosion ne sont pas parfaitement hermétiques à l'oxygène. Or, une très faible concentration en oxygène peut entraîner une importante dégradation par corrosion du joint 6.

Un but de l'invention proposée n'est pas d'inhiber la corrosion du joint 6 mais de déplacer la corrosion vers un autre élément. Selon un aspect de l'invention, il est proposé un gyrolaser comprenant une structure comprenant un premier matériau vitrocéramique. La structure comprend des ouvertures, des électrodes placées dans les ouvertures de la structure et des joints comprenant de l'indium d'un premier potentiel d'oxydoréduction assurant l'herméticité de la structure au niveau des ouvertures. Le gyrolaser comprend en outre en contact avec les joints au moins une électrode sacrificielle comprenant un deuxième matériau d'un deuxième potentiel d'oxydoréduction, le deuxième potentiel d'oxydoréduction étant inférieur au premier potentiel d'oxydoréduction, l'électrode sacrificielle étant ni disposée entre le bloc optique et les joints ni entre les joints et les électrodes.

Un gyrolaser selon un aspect de l'invention comprend donc une anode sacrificielle qui se dégrade à la place du joint qui conserve ses propriétés d'herméticité. Bien évidemment, l'interface entre le bloc, le joint et les électrodes ne comprend pas l'électrode sacrificielle. En effet, dans le cas contraire la corrosion de l'électrode sacrificielle dégraderait l'herméticité du dispositif.

Par ailleurs, le boîtier comprenant le gyrolaser n'a pas besoin d'être hermétique ce qui facilite l'élaboration du gyrolaser.

Avantageusement, la différence de potentiel entre le deuxième potentiel standard d'oxydoréduction du deuxième matériau et le premier potentiel standard d'oxydoréduction de l'indium est supérieure à 200 mV.

Le choix d'un tel deuxième matériau permet d'améliorer l'efficacité de la protection cathodique.

Avantageusement, le deuxième matériau est disposé de manière continue sur la surface du joint.

Alternativement, le deuxième matériau est disposé de manière discontinue sur la surface du joint, la distance entre deux portions du deuxième matériau étant inférieure à la moitié du périmètre du joint.

Ce mode de réalisation diminue les contraintes de mise en oeuvre lors de l'élaboration du gyrolaser contrairement aux solutions proposées dans l'art antérieur dans lesquelles les couches de protection ne devaient présenter aucun défaut de surface afin de garantir la protection du joint. Préférentiellement, la quantité de matière du deuxième matériau est au moins égale à la quantité de matière de l'indium à protéger.

L'anode sacrificielle permet de protéger le joint pendant toute la durée d'utilisation du gyrolaser.

Selon un autre aspect de l'invention, il est proposé un gyrolaser dans lequel le premier matériau vitrocéramique comprend des ions mobiles d'un troisième potentiel d'oxydoréduction, le troisième potentiel d'oxydoréduction des ions mobiles étant inférieur au deuxième potentiel d'oxydoréduction du deuxième matériau de l'électrode sacrificielle.

Ce mode de réalisation permet de régénérer l'électrode sacrificielle et ainsi de prolonger la durée de protection du joint.

Avantageusement, les ions mobiles comprennent des ions lithium ou des ions sodium.

Les ions lithium sont connus pour leur grande mobilité, ce qui facilite le processus de régénération de l'électrode sacrificielle.

Préférentiellement, le matériau vitrocéramique est du Zérodur^{®}. L'invention sera mieux comprise à l'étude de quelques modes de réalisation décrits à titre d'exemples nullement limitatifs, et illustrés par des dessins annexés sur lesquels :
- la figure 1, déjà décrite, illustre un schéma représentant un gyrolaser, selon l'art connu,
- la figure 2 représente une échelle de potentiels électrochimiques de différents matériaux, et
- la figure 3 représente un mode de réalisation, selon un aspect de l'invention,
- la figure 4 représente une configuration particulière de l'électrode sacrificielle, selon un aspect de l'invention.

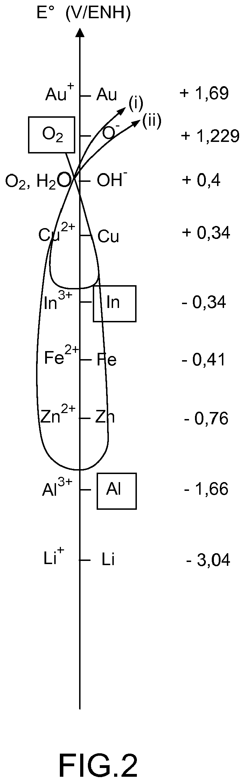

La figure 2 illustre une échelle de potentiel électrochimique appelée échelle de Nernst.

Le potentiel électrochimique est une grandeur empirique, il s'exprime en volt (V), et est noté E. Ce potentiel est exprimé par rapport à une électrode de référence. Par convention, le potentiel standard E° est mesuré par rapport au couple H⁺/H₂ de potentiel égal à zéro, servant d'électrode de référence. Cette mesure est appliquée aux couples d'oxydoréduction pour prévoir la réactivité des espèces chimiques entre elles. Les valeurs des potentiels standards E° déterminées pour différents matériaux constituent l'échelle de Nernst qui classe les métaux selon leur tendance à s'oxyder.

De cette échelle, il est possible de déduire, par exemple, qu'un métal comme l'or ne sera pas attaqué par l'oxygène puisqu'il présente un potentiel standard électrochimique plus élevé que celui de l'oxygène, l'oxygène s'oxydant plus facilement.

En l'absence de protection cathodique, lorsque l'indium du joint 6 est mis au contact avec de l'oxygène, il se s'oxyde selon la réaction suivante :

2 In + 3 O₂ → 2 In³⁺ + 6 O⁻ (i)

Les ions indium et oxygène réagissent pour former une couche d'oxyde ou d'hydroxyde selon la réaction suivante:

2 In³⁺ + 6 O⁻ → 2 InO₃ (ii)

Lorsque le gyrolaser n'est pas en fonctionnement, cette couche d'oxyde appelée couche de passivation protège l'indium de la corrosion.

Lorsque le gyrolaser est en fonctionnement, en d'autres termes lorsque les électrodes 5a, 5b du gyrolaser sont polarisées, la couche de passivation se fissure et n'assure plus son rôle de protection de l'indium contre la corrosion.

Selon un aspect de l'invention, un deuxième matériau fortement électronégatif est mis en contact avec le joint 6. Le deuxième matériau possède un potentiel standard électrochimique (E°₂) inférieur au potentiel standard électrochimique de l'indium (E°_{In} = -0,34 V/ENH).

Avantageusement la différence de potentiel entre le deuxième potentiel standard (E°₂) électrochimique du deuxième métal d'une anode sacrificielle 7 et le potentiel standard électrochimique de l'indium (E°_{In}) doit être supérieure à 200 mV. Préférentiellement, la différence de potentiel entre le deuxième potentiel standard électrochimique (E°₂) du deuxième métal d'une anode sacrificielle 7 et le potentiel standard de l'indium (E°_{In}) doit être supérieure à 500 mV, la protection étant plus efficace.

Avantageusement, le deuxième matériau peut comprendre du zinc ou de l'aluminium.

La réaction de réduction de l'oxygène provenant de l'air ou de l'eau met en jeu préférentiellement le deuxième métal, en l'espèce l'aluminium, selon la réaction suivante :

2 Al + 3 O₂ → 2 Al³⁺ + 6 O⁻ (iii)

En effet, la réaction de réduction de l'oxygène (iii) mettant en jeu le deuxième métal nécessite moins d'énergie que la réaction de réduction de l'oxygène (i) mettant en jeu l'indium, la réaction (iii) se produit donc prioritairement tant qu'il reste des molécules d'aluminium en contact avec le joint 6 comprenant de l'indium.

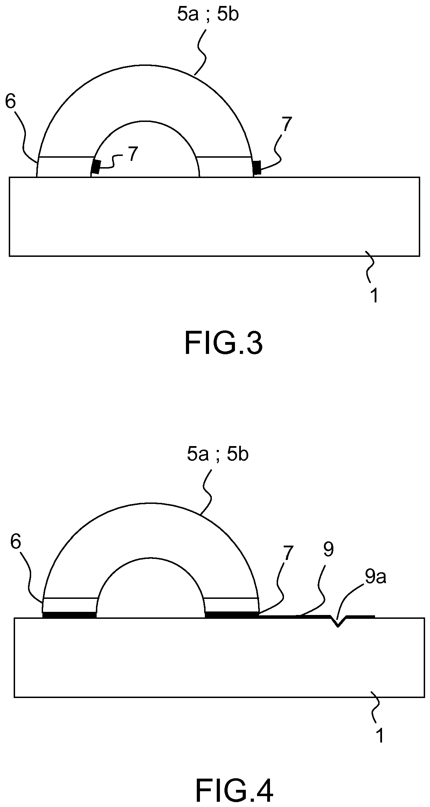

La figure 3 représente un mode de réalisation de l'invention.

Le joint 6 d'indium situé autour des électrodes 5a, 5b au niveau des ouvertures 4a assure l'herméticité du bloc optique 1, et plus précisément l'herméticité du tube capillaire 2.

Le joint 6 comprenant de l'indium est généralement réalisé par thermo-compression d'un fil comprenant de l'indium entre le bloc optique 1 et une électrode 5a, 5b. Une pression comprise entre 0,1 et 1 MPa est appliquée sur les électrodes 5a, 5b, sur le fil comprenant de l'indium et sur le bloc optique 1 à une température comprise entre -150°C à 150°C. Sous l'effet de la pression, le fil s'écrase, rompt la couche de passivation comprenant un oxyde ou un hydroxyde d'indium. L'indium sous-jacent est alors en contact avec les électrodes 5a, 5b et le bloc optique 1 et les lie. Le fil comprenant de l'indium forme alors un joint 6 d'épaisseur comprise entre 50 et 200 microns. Le joint 6 comprenant de l'indium qui est un matériau souple et malléable assure l'étanchéité du bloc optique 1.

L'anode sacrificielle 7 comprenant le deuxième matériau en contact avec le joint 6 peut être élaborée avant ou après la formation du joint 6 par thermo-compression.

La figure 3 présente une électrode 5a, 5b liée à un bloc optique 1 par l'intermédiaire d'un joint 6 comprenant de l'indium. L'anode sacrificielle 7 est disposée sur le côté du joint 6.

L'anode sacrificielle 7 est réalisée par dépôt du deuxième matériau, le dépôt peut être de type chimique, chemical vapor deposition (CVD), par exemple ou de type physique, pulvérisation cathodique, par exemple. Le deuxième matériau pouvant comprendre du zinc ou de l'aluminium ou tout autre matériau dont la différence le potentiel entre le potentiel standard électrochimique du deuxième matériau E°₂ le potentiel standard électrochimique E°_{In} de l'indium est supérieure à 200 mV.

Selon une autre variante de l'invention, l'anode sacrificielle peut être disposée autour de l'électrode 5a, 5b de manière à former une bague ou de manière discontinue sur une partie seulement des électrodes 5a, 5b. Préférentiellement, la distance entre deux portions du deuxième matériau constitutif de l'anode sacrificielle 7 doit être inférieure à la moitié du périmètre Avantageusement, l'anode sacrificielle 7 bénéficie d'une protection locale 8 permettant de ralentir la corrosion de l'anode sacrificielle 7 en limitant la concentration d'oxygène en contact avec l'anode sacrificielle 7 ce qui permet de prolonger la durée d'utilisation de l'anode sacrificielle 7 et par voie de conséquence la durée d'herméticité du joint 6.

Au cours de la vie du gyrolaser, celui-ci est soumis à des environnements agressifs, le dispositif proposé permet de prolonger la durée d'utilisation du joint 6. Lorsque le gyrolaser, selon un aspect de l'invention, est mis en présence d'oxygène, la barrière de protection 8 constituée d'une couche de vernis, de colle ou de mastic permet de ralentir la corrosion de l'anode sacrificielle 7. Toutefois, les contraintes mécaniques subies par la couche de protection 8 peuvent l'endommager et créer des fissures, comme indiqué précédemment, l'anode sacrificielle 7 se corrode alors préférentiellement ce qui évite la détérioration prématurée du joint 6. La protection du joint 6 est assurée par l'anode sacrificielle 7 tant qu'il reste du deuxième matériau sous forme métallique. Quand, il ne reste plus de deuxième matériau sous forme métallique, l'indium présent dans le joint 6 réagit avec l'oxygène de l'environnement selon les réactions (i) et (ii), le joint 6 se dégrade alors et perd ses capacités d'étanchéité.

Pour augmenter encore la durée d'utilisation du joint 6, il est proposé selon un autre aspect de l'invention de mettre en contact l'anode sacrificielle 7, comprenant un deuxième matériau de deuxième potentiel standard électrochimique E°₂, avec le bloc optique 1.

Le bloc optique 1 comprend généralement du Zérodur (marque déposée), ce matériau comprend notamment une structure amorphe, une structure cristalline et des ions libres assurant la transition entre ses deux structures. Le zérodur comprend différents oxydes tels que l'oxyde de silicium, d'aluminium, de phosphore, de magnésium, de zinc, de sodium de potassium... Il comprend en outre des ions lithium (Li⁺) libres, le couple oxydant/réducteur Li/Li⁺ possède un troisième potentiel standard

Le bloc optique 1 comprend généralement du Zérodur^{®}, ce matériau comprend notamment une structure amorphe, une structure cristalline et des ions libres assurant la transition entre ses deux structures. Le zérodur comprend différents oxydes tels que l'oxyde de silicium, d'aluminium, de phosphore, de magnésium, de zinc, de sodium de potassium... Il comprend en outre des ions lithium (Li⁺) libres, le couple oxydant/réducteur Li/Li⁺ possède un troisième potentiel standard électrochimique E°_{Li} inférieur au deuxième potentiel standard électrochimique E°₂.

Soumis au champ électrique généré par l'anode 5a et la cathode 5b, les ions lithium migrent vers les électrodes 5a, 5b, l'anode 5a étant polarisée légèrement négativement. Cependant les ions lithium migrent aussi en partie vers le joint 6.

Une migration des ions lithium directement sur le joint 6 doit être évitée. En effet cela provoque la corrosion du lithium sous forme d'oxyde de lithium. Or une couche d'oxyde de lithium dégrade l'adhérence entre le joint 6 et les électrodes 5a, 5b ce qui diminue l'adhérence entre le joint 6 et l'électrode 5a, 5b.

Une conception efficace, connue de l'art antérieur, de l'anode sacrificielle 7 permet aux ions lithium de migrer préférentiellement vers elle au lieu de migrer vers le joint 6.

La figure 4 représente un mode de réalisation d'une électrode sacrificielle 7 permettant d'attirer préférentiellement les ions lithium vers elle.

Selon la figure 4, l'électrode sacrificielle 7 est disposée autour du joint 6, L'électrode sacrificielle 7présente une partie distale 9, la partie distale 9 présente au moins une pointe 9a.

Alternativement, la partie distale 9 présente une rainure 9b.

Les éléments 9a et 9b de la partie distale 9 permettent par un processus physique, connu sous le nom d'effet pointe, d'augmenter le potentiel de la partie distale 9 par rapport au potentiel de l'électrode sacrificielle 7. Cette augmentation de potentiel va attirer préférentiellement les ions lithium et ainsi diminuer l'attrait des ions lithium pour le joint 6.

Les ions lithium en contact avec la cathode peuvent fixer, notamment, un électron en excès à la surface de la cathode pour former du lithium sous forme neutre. Le lithium sous sa forme neutre est donc en contact avec l'anode sacrificielle 7 en l'espèce avec une anode 7 comprenant de l'aluminium dont une partie est oxydée par l'oxygène environnant. L'anode sacrificielle comprend donc des ions Al³⁺ qui se trouvent généralement sous la forme d'un oxyde Al₂O₃, il se produit alors les réactions suivantes :

Al₂O₃ → 2Al³⁺ + 3O²⁻ (iv)

Al³⁺ + 3 Li → 3Li⁺ + Al (v)

Le produit de corrosion de l'anode sacrificielle 7, en l'espèce l'oxyde d'aluminium est alors réduit selon la réaction (v) pour former à nouveau de l'aluminium.

Ainsi, le lithium formé à partir des ions lithium libres en provenance du premier matériau de vitrocéramique permet une régénération de l'électrode sacrificielle 7 ce qui permet de prolonger la durée d'utilisation de l'électrode sacrificielle 7 et ainsi de prolonger la durée d'utilisation du joint 6.

Avantageusement, le phénomène de régénération de l'anode sacrificielle est aisément détectable. En effet, en revenant sous sa forme métallique, l'électrode sacrificielle 7 devient sensible au phénomène d'électro-migration. Le matériau de l'électrode sacrificielle 7 subit le champ électrique des électrodes 5a, 5b et se déplacent vers elles.

Le gyrolaser proposé assure une durée d'utilisation du joint 6 plus longue, ce qui autorise une durée d'utilisation du gyrolaser de 20 à 25 ans sans nécessité d'intervention d'entretien du joint 6 ou de renouvellement des anodes sacrificielles 7.

## Revendications

1. Gyrolaser comprenant un bloc optique (1), ledit bloc optique (1) comprenant un premier matériau vitrocéramique comprenant des ouvertures (4a), des électrodes (5a ; 5b) placées dans les ouvertures (4a) du bloc optique (1) et des joints (6) comprenant de l'indium d'un premier potentiel d'oxydoréduction (E°₁) assurant l'herméticité du bloc optique (1) au niveau des ouvertures (4a), **caractérisé en ce que** le gyrolaser comprend en outre en contact avec les joints (6) au moins une électrode sacrificielle (7) comprenant un deuxième matériau d'un deuxième potentiel d'oxydoréduction (E°₂), le deuxième potentiel d'oxydoréduction (E°₂) étant inférieur au premier potentiel d'oxydoréduction (E°₁), l'électrode sacrificielle (7) n'étant ni disposée entre le bloc optique (1) et les joints (6) ni entre les électrodes (5a ; 5b) et les joints (6).

2. Gyrolaser selon la revendication 1 dans lequel la différence de potentiel entre le deuxième (E°₂) et le premier (E°₁) potentiel d'oxydoréduction est supérieure à 200 mV.

3. Gyrolaser selon l'une des revendications 1 ou 2 dans lequel le deuxième matériau est disposé de manière continue sur la surface du joint (6).

4. Gyrolaser selon l'une des revendications 1 ou 2 dans lequel le deuxième matériau est disposé de manière discontinue sur la surface du joint (6).

5. Gyrolaser selon la revendication 4 dans lequel la distance entre deux portions du deuxième matériau est inférieure à la moitié du périmètre du joint (6).

6. Gyrolaser selon l'une des revendications précédentes dans lequel la quantité de matière du deuxième matériau est au moins égale à la quantité de matière de l'indium.

7. Gyrolaser selon l'une des revendications précédentes dans lequel le premier matériau vitrocéramique est en contact avec le deuxième matériau de l'électrode sacrificielle (7), le premier matériau vitrocéramique comprenant des ions mobiles d'un troisième potentiel d'oxydoréduction (E°₃), le troisième potentiel d'oxydoréduction (E°₃) des ions mobiles étant inférieur au deuxième potentiel d'oxydoréduction (E°₂) du deuxième matériau de l'électrode sacrificielle.

8. Gyrolaser selon la revendication 7 dans lequel l'électrode sacrificielle (7) comprend une partie distale (9) présentant au moins une pointe (9a) ou/et une rainure (9b) formant un trou borgne dans le premier matériau vitrocéramique.

9. Gyrolaser selon la revendication 7 dans lequel les ions mobiles comprennent des ions lithium ou des ions sodium.

10. Gyrolaser selon l'une des revendications 7 à 9 dans lequel le matériau vitrocéramique est du Zérodur^{®}.

## Patentansprüche

1. Laserkreisel, der einen optischen Block (1) umfasst, wobei der optische Block (1) ein erstes vitrokeramisches Material mit Öffnungen (4a), in den Öffnungen (4a) des optischen Blocks (1) platzierten Elektroden (5a; 5b) und Dichtungen (6) umfasst, die Indium mit einem ersten Oxidationsreduktionspotenzial (E°₁) umfassen, das die hermetische Dichtheit des optischen Blocks (1) an den Öffnungen (4a) gewährleistet, **dadurch gekennzeichnet, dass** der Laserkreisel ferner in Kontakt mit den Dichtungen (6) wenigstens eine Opferelektrode (7) umfasst, die ein zweites Material mit einem zweiten Oxidationsreduktionspotenzial (E°₂) umfasst, wobei das zweite Oxidationsreduktionspotenzial (E°₂) kleiner ist als das erste Oxidationsreduktionspotenzial (E°₁), wobei die Opferelektrode (7) weder zwischen dem optischen Block (1) und den Dichtungen (6) noch zwischen den Elektroden (5a; 5b) und den Dichtungen (6) angeordnet ist.

2. Laserkreisel nach Anspruch 1, wobei die Potenzialdifferenz zwischen dem zweiten (E°₂) und dem ersten (E°₁) Oxidationsreduktionspotenzial größer als 200 mV ist.

3. Laserkreisel nach Anspruch 1 oder 2, bei dem das zweite Material auf kontinuierliche Weise auf der Oberfläche der Dichtung (6) angeordnet ist.

4. Laserkreisel nach Anspruch 1 oder 2, bei dem das zweite Material auf diskontinuierliche Weise auf der Oberfläche der Dichtung (6) angeordnet ist.

5. Laserkreisel nach Anspruch 4, wobei der Abstand zwischen zwei Abschnitten des zweiten Materials kleiner ist als die Hälfte des Umfangs der Dichtung (6).

6. Laserkreisel nach einem der vorherigen Ansprüche, wobei die Menge an Masse des zweiten Materials wenigstens gleich der Menge an Masse des Indiums ist.

7. Laserkreisel nach einem der vorherigen Ansprüche, wobei das erste vitrokeramische Material mit dem zweiten Material der Opferelektrode (7) in Kontakt ist, wobei das erste vitrokeramische Material bewegliche Ionen eines dritten Oxidationsreduktionspotenzials (E°₃) umfasst, wobei das dritte Oxidationsreduktionspotenzial (E°₃) der beweglichen Ionen kleiner ist als das zweite Oxidationsreduktionspotenzial (E°₂) des zweiten Materials der Opferelektrode.

8. Laserkreisel nach Anspruch 7, wobei die Opferelektrode (7) einen distalen Teil (9) umfasst, der wenigstens eine Spitze (9a) und/oder eine Rille (9b) aufweist, die ein Sackloch in dem ersten vitrokeramischen Material bildet/bilden.

9. Laserkreisel nach Anspruch 7, bei dem die beweglichen Ionen Lithiumionen oder Natriumionen umfassen.

10. Laserkreisel nach einem der Ansprüche 7 bis 9, wobei das vitrokeramische Material Zerodur® ist.

## Claims

1. A gyrolaser comprising an optical block (1), said optical block (1) comprising a glass-ceramic first material comprising apertures (4a), electrodes (5a; 5b) placed in the apertures (4a) of the optical block (1) and seals (6) comprising indium of a first redox potential (E°₁) ensuring the hermeticity of the optical block (1) at the location of the apertures (4a), **characterised in that** the gyrolaser further comprises, in contact with the seals (6), at least one sacrificial electrode (7) comprising a second material of a second redox potential (E°₂), the second redox potential (E°₂) being lower than the first redox potential (E°₁), the sacrificial electrode (7) being neither placed between the optical block (1) and the seals (6) nor between the electrodes (5a; 5b) and the seals (6).

2. The gyrolaser according to Claim 1, wherein the potential difference between the second redox potential (E°₂) and the first redox potential (E°₁) is greater than 200 mV.

3. The gyrolaser according to either of Claims 1 or 2, wherein the second material is placed continuously on the surface of the seal (6).

4. The gyrolaser according to either of Claims 1 or 2, wherein the second material is placed discontinuously on the surface of the seal (6).

5. The gyrolaser according to Claim 4, wherein the distance between two portions of the second material is smaller than half the perimeter of the seal (6).

6. The gyrolaser according to any of the preceding claims, wherein the amount of mass of the second material is at least equal to the amount of mass of indium.

7. The gyrolaser according to any of the preceding claims, wherein the glass-ceramic first material is in contact with the second material of the sacrificial electrode (7), the glass-ceramic first material comprising mobile ions of a third redox potential (E°₃), the third redox potential (E°₃) of the mobile ions being lower than the second redox potential (E°₂) of the second material of the sacrificial electrode.

8. The gyrolaser according to Claim 7, wherein the sacrificial electrode (7) comprises a distal part (9) having at least one point (9a) and/or one groove (9b) forming a blind hole in the glass-ceramic first material.

9. The gyrolaser according to Claim 7, wherein the mobile ions comprise lithium ions or sodium ions.

10. The gyrolaser according to any of Claims 7 to 9, wherein the glass-ceramic material is Zerodur®.
